# EUROPEAN PATENT SPECIFICATION

(11) **EP 1 143 782 B1**
(45) Date of publication and mention of the grant of the patent: **12.02.2003**
(21) Application number: 99958380.0
(22) Date of filing: 06.12.1999
(51) Int. Cl.: A01B 15/04

(54) **REPLACEABLE WEAR PART FOR SOIL-ENGAGING TOOL**
AUSWECHSELBARES VERSCHLEISSTEIL FÜR BODENBEARBEITUNGSGERÄT
PIECE D'USURE REMPLACABLE POUR OUTIL DE TRAVAIL DU SOL

(30) Priority: 22.01.1999 GB 9901411; 14.09.1999 GB 9921547
(43) Date of publication of application: 17.10.2001
(73) Proprietor: Kverneland Klepp AS, 4344 Kverneland (NO)
(72) Inventor: FURRE, Arnold, N-4300 Sandnes (NO)
(74) Representative: Orr, William McLean
(86) International application number: GB9904074
(87) International publication number: WO00042834

(56) References cited:
- EP-A- 0 442 449
- WO-A-82/04375
- DE-U- 29 808 670
- FR-A- 2 332 381
- GB-A- 2 093 325
- US-A- 3 082 555
- US-A- 4 625 810

## Description

This invention relates to a replaceable wear part of a soil-engaging tool which is intended to be mounted on a frame of an agricultural implement, and having at least one working surface region which is exposed to wearing action by contact with soil when carrying out a soil-working action of the kind as disclosed in US-A-4 625 810.

Typical examples of replaceable wear part to which the invention may be applied include so-called "points", the tips of tines, and plough shares, and which are normally exposed to substantial wearing action as they move through the ground in order to carry out required soil-working operations. The working surface regions or the tools which are exposed to the most significant wearing action will usually be the forwardly facing surfaces of the wear parts which are relatively narrow in width (with respect to the working direction) and therefore the abrasive loads generated by movement through the ground will be concentrated on a relatively small area, with resulting high pressure abrasive contact.

These surface regions are therefore liable to wear more rapidly than the other surfaces of the tools, and therefore it is usual to provide replaceable wear parts which can be fitted in these high wear regions of the tools. These wear parts will usually be made of specially hardened steel, so as to have a longer useful working life than mild steel, which may be suitable for the fabrication of the main body of the tool concerned.

It is usual to secure the replaceable wear parts by bolts, welding, soldering or brazing. An alternative to fabricating separate wear parts for subsequent mounting on high wear regions of the tool concerned is to build-up additional material on the high wear regions by welding.

When an unacceptable amount of wear has occurred, it is necessary to remove the worn parts and then fit replacement parts. This is a time-consuming and expensive exercise, and especially when dealing with a multi-tool agricultural implement, such as a set of harrow tines or a seed drill. It is therefore desirable to enhance the wear-resistant properties of the wear parts which necessarily will have to be replaced over a period of time.

As mentioned above, the replacement wear parts can be made of hardened steel, and to increase the working life, the hardness has been increased gradually over the years, but there are limits as to how hard and wear resistant these parts can be made. Thus, excessive increase in hardness (to improve resistance to abrasive wear action) may result in embrittlement with consequent risk of fracture under load.

The alternative is to add wear resistant material to the high wear surface regions of the tool i.e. to build-up these regions with weld-deposited material, but this is expensive and time consuming, and requiring skilled technicians to carry out the operation.

The invention therefore seeks to provide improvement over these known methods, by simpler but effective means of enhancing the wear-resistance properties of the replaceable wear parts which are fitted to high wear regions of soil working tools.

According to the invention there is provided a replaceable wear part of a soil-working tool which is intended to be mounted on the frame of an agricultural implement and which has at least one working surface region which is exposed to wearing action by contact with soil when carrying out a soil-working operation, and a wear protecting element which is mounted on the wear part at said working surface region and which has a working edge which forms at least part of a working edge of the wear part, in which:
(a) the wear protecting element is mounted in position via an adhesively secured tongue and groove type of interfit between the wear protecting element and the wear part, and in which the working edge of the wear protecting element extends transversely of the general longitudinal axis of the groove;
(b) relative slidable movement longitudinally of the groove can take place between the wear protecting element and the wear part in order to mount, or de-mount the wear protecting element;
(c) the initial fit between the tongue and the groove defines a space into which adhesive can be introduced; and,
(d) the interfit between the tongue and the groove includes a diverging formation arranged to resist relative separation of the wear protecting element and the wear part in a direction perpendicular to the groove whereby resistance to relative longitudinal displacement between the tongue and the groove is provided substantially by the adhesive, and resistance to any load tending to separate the tongue and the groove in a direction perpendicular to the longitudinal extent of the groove is borne substantially by the diverging formation.

Therefore, a replaceable wear part according to the invention has the advantage that the wear protecting element can be readily mounted in position, and demounted when worn, by relative slidable movement between the tongue and the groove, and the adhesive used to complete the securement of the tongue and groove together serves to resist relative longitudinal displacement between the tongue and the groove e.g. when the tool is lifted out of the ground, whereas the loads applied in service to the wear protecting element (and which might cause relative separation between the wear protecting element and the wear part) are resisted substantially by the diverging formation which forms part of the interfit between the tongue and the groove.

In addition, the soil-working tool can be relatively thin, but made of hardened material, and having inserted extra wear resistant wear parts which are at least as thick as the thickness of the soil working tool. This is a further advantage which is achievable by the invention.

The reference to a "tongue and groove type of interfit" is intended to include any type of interengagement between an elongate projection, such as a rib, and a recess e.g. a slot or groove of generally similar shape to the projection so as to receive the latter.

In a preferred arrangement, the wear protecting element has on one side a hardened working face which is exposed to abrasive action, and on its opposite side it has a projecting rib which is received by a correspondingly shaped groove in the surface cf the wear part.

Conveniently, a small clearance exists between at least some of the adjacent surfaces of the rib and groove, into which a suitable adhesive can be introduced which, on curing or setting, then secures the wear protecting element to the wear part.

A two component curing adhesive is a preferred form of adhesive which is used.

In an alternative arrangement, the surface of the wear part which is to be protected against wear may have a projecting rib or the like, and the wear protecting element has a matching groove on its mounting face i.e. the face opposite to the working face of the wear part.

A typical wear protecting element used in the invention, when applied to a tine point, may comprise a relatively small wear-protecting bit. However, when a more substantial wear-resistant surface is required e.g. on a side of a plough share, it may be desirable to mount a number cf separate wear protecting elements adjacent to each other i.e. 1) side by side; 2) one behind the other lengthwise of a common groove; or 3) side by side on parallel grooves and one behind the other along the grooves.

When a rib is provided on the underside of a wear protecting element (or bit), it may be located substantially mid-way between the side edges of the element. The rib may be dove-tail shaped, so that it can be slid longitudinally of a similarly shaped groove (to mount or the wear element), and in which the cooperation between the rib and groove will resist separation of the wear element in a direction perpendicular to the axis of the groove.

Alternatively to a centrally located rib, the wear element may have more than one rib e.g. two, and preferably located one at each side of the wear element. In this case, it will be possible to mount two wear elements side by side, with a side rib for one part lying adjacent to a side rib of another part, and the pair of ribs being housed in a common groove.

A replaceable wear part according to the invention may be mounted on working surfaces of many different types of soil working tool used in agricultural implements, to provide additional wear resistance on surface regions which are exposed to substantial wearing action during operation. Preferred embodiments of wear part to which the invention may be applied include points, tines and plough shares.

Preferred embodiments of replaceable wear parts according to the invention will now be described in detail, by way of example only, with reference to the accompanying drawings, in which:
Figure 1 is a rear view of a tine point according to the invention, having at least one wear protecting element mounted thereon;
Figure 2 is a side view corresponding to Figure 1;
Figure 3 is a section taken on the line B-B in Figure 1;
Figure 4 is a view taken in the direction of a lower working tip of the tine point, showing the wear element mounted thereon;
Figure 5 is a side view of a further type of replaceable wear part to which the invention may be applied;
Figure 6 is a side view of a plough share, on which can be mounted a number of wear protecting elements in a further embodiment of the invention;
Figures 6a and 6b are illustrations of two alternative means of mounting the wear protecting elements on working surface regions of the plough share shown in Figure 6;
Figures 7 and 8 are, respectively, perspective and plan view illustrations of a further embodiment of wear protecting element for mounting on a wearing region of a replaceable wear part of a soil-working tool; and,
Figures 9 and 10 are front and side views of another example of soil-working tool to which a replaceable wear part according tc the invention can be applied.

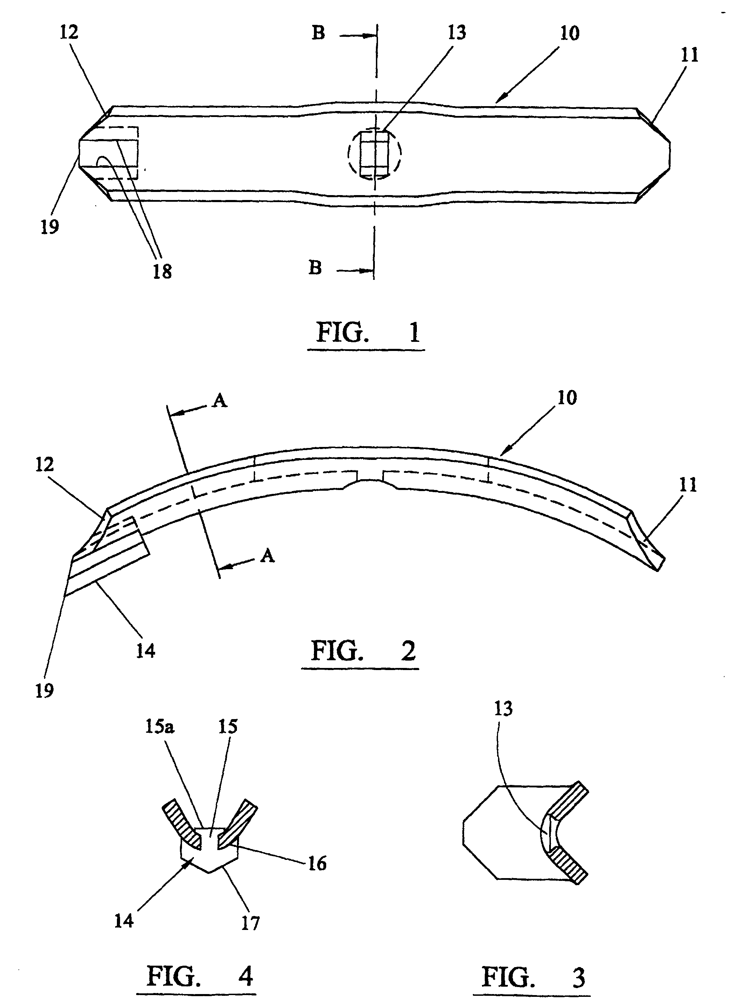

Referring first to Figures 1 to 4 of the drawings, the first embodiment of the invention comprises a replaceable wear part in the form of a tine which is designated generally by reference 10, having an upper end 11 and a lower working tip end 12, and centrally mounted on the frame of an agricultural implement (not shown) via mounting 13 e.g. the frame of a multi-tine harrow.

The wear part 10 has at least one working surface region which is exposed to particularly arduous wearing action by contact with soil when carrying out a soil working action, namely the lower tip end 12. A wear protecting element 14 is therefore mounted on the wear part 10 at this working surface region via an adhesively secured tongue and groove type of interfit between the wear element 14 and the part 10. In the illustrated embodiment, the interfit takes the form of a longitudinally extending rib 15 (see Figure 4) which is located on the underside 16 of the element 14 i.e. on the side opposite to the exposed working side 17 of the element 14, (which will usually be surface hardened to increase the wear resistance of the element 14). The wear protecting element 14 will usually be made to be more wear-resistant than the remainder of the wear part, and may be made of e.g. special steel with selected alloy elements, such as tungsten; or could be made of ceramic material.

The rib 15 is slidably received lengthwise of a mounting groove 18 formed in the lower tip end 12 of the part 10. It will be seen particularly from Figure 4 that the rib 15 is widened at its inboard end to form a diverging formation 15a, so as to resist separation between the wear element 14 and the tip end 12 in a direction perpendicular to the axis of the groove 18.

In the illustrated arrangement, the groove 18 is formed by a bottomless slot i.e. a complete cut-out formed in the tip end 12, with the widened inboard end of the rib 15 being held captive below the margins of the groove 18. However, in some circumstances, the groove 18 may have a base, but preferably the side walls of the groove will be dovetail shaped, and with corresponding shaping to the side walls of the rib 15, so that mounting can only take place by longitudinal sliding movement.

Also, while the illustrated embodiment provides rib 15 on the wear element 14, and the groove 18 in the working surface region (12) of the part 10, evidently these two parts of the tongue and groove type of interfit may be reversed, with the projecting rib being provided on the tip end, and a matching groove being formed in the wear element 14.

To achieve necessary adhesive securement of the tongue and groove type of interfit, small clearances are provided between at least some of the adjacent surfaces of the rib and groove, into which a suitable adhesive can be introduced which, on curing or setting, then secures the wear element to the wear part. A two component curing type of adhesive is a preferred form of adhesive which is used.

Therefore, the adhesive provides resistance to relative longitudinal displacement between the tongue and the groove, and which will usually arise when the tool is lifted out of the ground, whereas the diverging formation e.g. widened end 15a of the rib 15, resists any load applied in service which tends to separate the tongue and the groove in a direction perpendicular to the longitudinal extent of the groove.

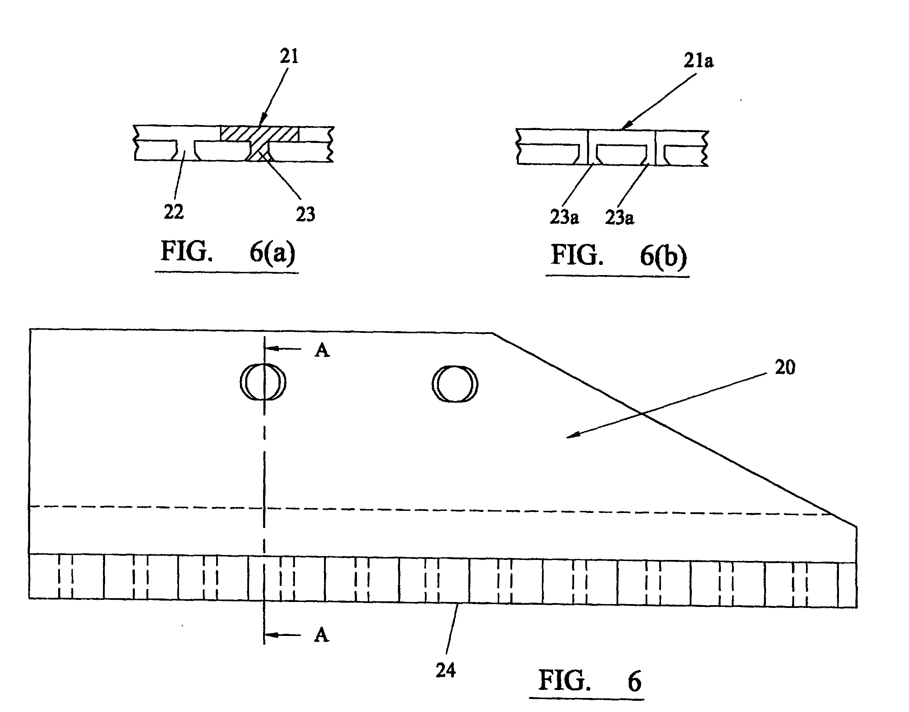

The wear part 10 (tine) is one example only of a type of wear part to which the invention may be applied, in which there is only a relatively small surface area which is exposed to particularly abrasive wearing action, and therefore a relatively small area wear-protecting element or bit 14 is sufficient. However, when a more substantial wear-resistant surface is required e.g. on a plough share, as shown in Figure 6, it may be desirable to mount a number of separate wear elements adjacent to each other. The wear elements can be mounted side by side on parallel grooves. Alternatively, the wear elements could be arranged one behind the other, lengthwise of a common groove. Finally, to provide a particularly large wear resistant surface, separate wear elements can be mounted side by side on parallel grooves, and one behind the other along the length of the grooves.

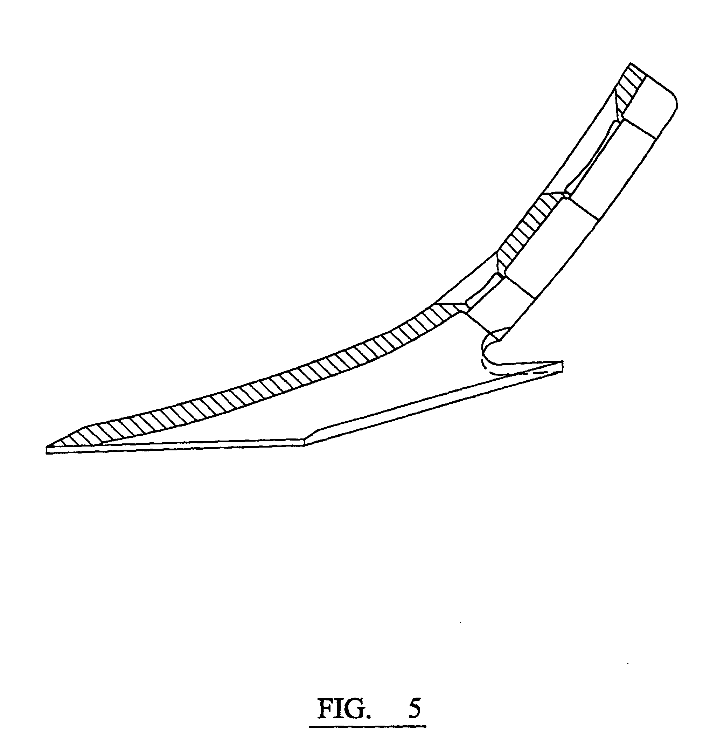

Figure 5 shows a further example of tine-type of wear parts to which the invention may also be applied. Figure 6, as mentioned above, shows an example of the invention in which a number of separate replaceable wear elements are mounted on a plough share designated generally by reference 20. The plough share 20 may have more than one surface region which is exposed to substantial abrasive wearing action, by contact with soil during movement through the ground, and a number of sets of wear elements can therefore be mounted on each of these surface regions. Figures 6a and 6b show two different ways of mounting adjacent wear elements on the wear part 20. Figure 6a shows a set of wear elements 21 mounted side by side on parallel grooves 22 formed in the working surface region of the plough share 20. It will be noted that the grooves 22 are shaped as dovetail shape, and the projecting rib 23 received by each groove 22 is similarly dovetail shaped.

In the arrangement shown in Figure 6a, the projecting rib 23 is located centrally of the underside of the wear element 21. In Figure 6b, there is shown an arrangement in which each wear element 21a has a pair of longitudinally extending ribs 23a, located one at each side thereof, so that the ribs of adjacent wear elements 21a lie alongside each other. Thus, a rib from one wear element 21a lies alongside a rib of an adjacent wear element, and the pair of ribs are received by a common dovetail shape groove formed in the surface of the working region.

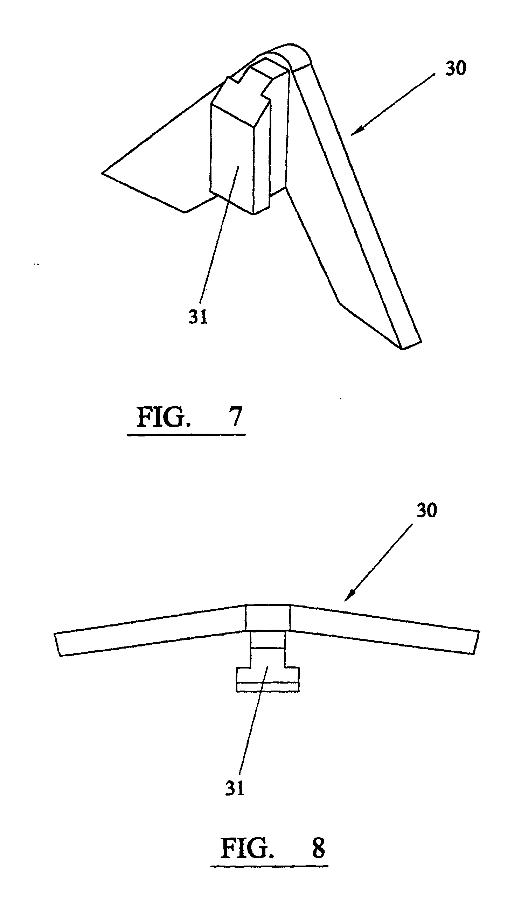

Referring to Figures 7 and 8 of the drawings, these show a further example of wear protecting element 30 which can be mounted on a working region of a wear part via an adhesively secured tongue and groove type of interfit. The element 30 has a rib provided with a widened diverging formation 31, which resists relative separation in a direction perpendicular to the longitudinal axis of the groove in which it is slidably received.

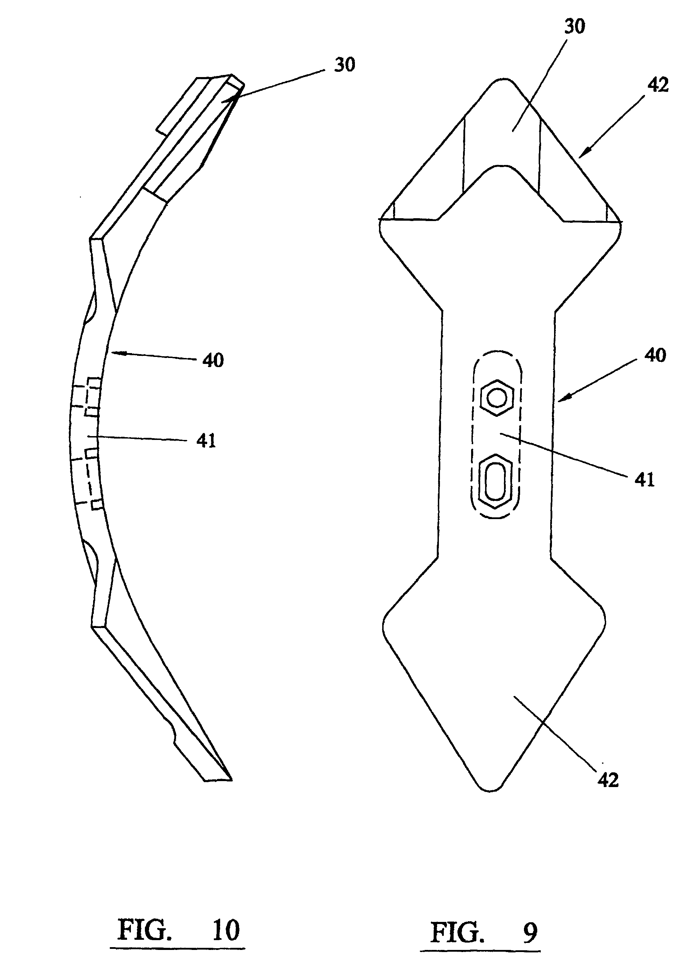

There are many examples of soil-working tool to which a replaceable wear part according to the invention can be applied, and one further example is shown in Figures 9 and 10, and which comprises a point designated generally by reference 40, and which can be mounted in position by bolts and other fixings at a central mounting point 41. The point 40 has opposed working tips 42, and the point 40 is reversible, so that when one particular tip 42 becomes excessively worn or damaged, the point 40 can be reversed, so as to present the unworn and previously non-working tip into operation.

A replaceable wear part according to the invention can readily be mounted on one or both of the tips 42, and in the illustrated arrangement the wear part 30 described above with reference to Figures 7 and 8 is shown mounted in position on one or the tips 42.

## Claims

1. A replaceable wear part (10, 20) of a soil-working tool which is intended to be mounted on the frame of an agricultural implement and which has at least one working surface region (12) which is exposed to wearing action by contact with soil when carrying out a soil-working operation, and a wear protecting element (14; 21, 21a; 30) which is mounted on the wear part at said working surface region (12) and which has a working edge (19, 24) which forms at least part of a working edge of the wear part, in which:
(a) the wear protecting element (14; 21, 21a; 30) is mounted in position via an adhesively secured tongue and groove type of interfit (15, 18) between the wear protecting element and the wear part, and in which the working edge (19, 24) of the wear protecting element extends transversely of the general longitudinal axis of the groove (18);
(b) relative slidable movement longitudinally of the groove (18) can take place between the wear protecting element and the wear part in order to mount, or de-mount the wear protecting element;
(c) the initial fit between the tongue and the groove defines a space into which adhesive can be introduced; and,
(d) the interfit between the tongue and the groove includes a diverging formation (15a; 23, 23a; 31) arranged to resist relative separation of the wear protecting element and the wear part in a direction perpendicular to the groove whereby resistance to relative longitudinal displacement between the tongue and the groove is provided substantially by the adhesive, and resistance to any load tending to separate the tongue and the groove in a direction perpendicular to the longitudinal extent of the groove is borne substantially by the diverging formation.

2. A wear part according to claim 1, in which the tongue (15) is provided on the wear protecting element (14), and the groove (18) is formed in the wear part.

3. A wear part according to claim 2, in which the groove is formed by a bottomless slot (18) formed in the wear part (10).

4. A wear part according to any one of claims 1 to 3, in which the wear protecting element (14) has on one side a hardened working face (17), and on its opposite side a projecting rib (15) which is received by a correspondingly shaped groove (18) in the surface of the wear part (10).

5. A wear part according to claim 1, in which the surface (12) of the part (10) which is to be protected against wear has a projecting rib or the like, and the wear protecting element (14) has a matching groove on its mounting face to fit with said rib.

6. A wear part according to any one of the preceding claims, and taking the form of a point, or a tine (10).

7. A wear part according to any one of claims 1 to 5, in which a number of separate wear protecting elements (21) are mounted adjacent to each other on the wear part (20).

8. A wear part according to claim 7, in which the wear protecting element (21, 21a) are arranged:
(a) side by side on parallel grooves;
(b) one behind the other lengthwise of a common groove; or,
(c) side by side on parallel grooves and one behind the other along the lengths of the grooves.

9. A wear part according to any one of the preceding claims, in which a single rib (23) is mounted centrally of the underside of the wear protecting element (21).

10. A wear part according to claim 8, in which adjacent wear protecting element (21a) are mounted side by side, and each has a pair of projecting ribs (23a) arranged one at each side thereof, so that a rib or one part can lie alongside a rib of another part, and be housed in a common groove.

## Patentansprüche

1. Austauschbares Verschleißteil (10, 20) eines Bodenbearbeitungswerkzeugs, das dazu bestimmt ist, auf dem Rahmen eines landwirtschaftlichen Geräts angebracht zu werden und das wenigstens einen Bearbeitungsoberflächenbereich (12) hat, welcher einer Abnutzungswirkung durch Kontakt mit dem Erdboden ausgesetzt ist, wenn ein Bodenbearbeitungsvorgang ausgeführt wird, und ein Verschleißschutzelement (14; 21, 21a; 30), das auf dem Verschleißteil an dem Arbeitsoberflächenbereich (12) angebracht ist und das einen Bearbeitungsrand (19, 24) hat, welcher wenigstens einen Teil eines Bearbeitungsrands des Verschleißteils bildet, in dem:
(a) das Verschleißschutzelement (14; 21, 21a; 30) in Position über eine haftend befestigte Passung (15, 18) mit Übermaß vom Zungen- und Nuttyp zwischen dem Verschleißschutzelement und dem Verschleißteil angebracht ist, und in dem sich der Bearbeitungsrand (19, 24) des Verschleißschutzelements quer zu der generellen Längsachse der Nut (18) erstreckt;
(b) eine relative verschiebliche Bewegung in Längsrichtung der Nut (18) zwischen dem Verschleißschutzelement und dem Verschleißteil zum Montieren oder Demontieren des Verschleißschutzelements stattfinden kann;
(c) die anfängliche Passung zwischen der Zunge und der Nut einen Zwischenraum begrenzt, in welche Haftmittel eingeführt werden kann; und
(d) die Passung mit Übermaß zwischen der Zunge und der Nut eine divergierende Gestaltung (15a; 23, 23a; 31) umfasst, die so gestaltet ist, dass sie einer relativen Trennung des Verschleißschutzelements und des Verschleißteils in einer Richtung senkrecht zu der Nut widersteht, wodurch ein Widerstand gegen eine relative Längsverlagerung zwischen der Zunge und der Nut im Wesentlichen durch das Haftmittel vorgesehen wird und ein Widerstand gegen irgendeine Belastung, die die Tendenz hat, die Zunge und die Nut in einer Richtung senkrecht zu der Längserstreckung der Nut zu trennen, im Wesentlichen durch die divergierende Gestaltung ausgeübt wird.

2. Verschleißteil gemäß Anspruch 1, in dem die Zunge (15) auf dem Verschleißschutzelement (14) vorgesehen ist, und die Nut (18) in dem Verschleißteil ausgebildet ist.

3. Verschleißteil gemäß Anspruch 2, in dem die Nut durch einen unbegrenzten Schlitz (18) gebildet ist, der in dem Verschleißteil (10) ausgebildet ist.

4. Verschleißteil gemäß irgendeinem der Ansprüche 1 bis 3, in dem das Verschleißschutzelement (14) auf einer Seite eine gehärtete Bearbeitungsfläche (17) hat und auf seiner entgegengesetzten Seite eine vorstehende Rippe (15), welche von einer entsprechend geformten Nut (18) in der Oberfläche des Verschleißteils (10) aufgenommen ist.

5. Verschleißteil gemäß Anspruch 1, in dem die Oberfläche (12) des Teils (10), welches gegen Verschleiß geschützt werden soll, eine vorstehende Rippe oder dergleichen hat, und das Verschleißschutzelement (14) eine damit zusammenpassende Nut auf seiner Anbringungsfläche zum Zusammenpassen mit der Rippe hat.

6. Verschleißteil gemäß irgendeinem der vorhergehenen Ansprüche, welches die Form einer Spitze oder eines Zinkens (10) annimmt.

7. Verschleißteil gemäß irgendeinem der Ansprüche 1 bis 5, in dem eine Anzahl von separaten Verschleißschutzelementen (21) benachbart einander auf dem Verschleißteil (20) montiert ist.

8. Verschleißteil gemäß Anspruch 7, in dem die Verschleißschutzelemente (21, 21a) angeordnet sind:
(a) Seite an Seite auf parallelen Nuten;
(b) eines hinter dem anderen in Längsrichtung einer gemeinsamen Nut; oder
(c) Seite an Seite auf parallelen Nuten und eines hinter dem anderen entlang den Längen der Nuten.

9. Verschleißteil gemäß irgendeinem der vorhergehenden Ansprüche, in dem eine einzige Rippe (23) mittig von der Unterseite des Verschleißschutzelements (21) montiert ist.

10. Verschleißteil gemäß Anspruch 8, in dem benachbarte Verschleißschutzelemente (21a) Seite an Seite montiert sind, und jedes ein Paar von vorstehenden Rippen (23a) hat, von denen eine auf jeder Seite desselben angeordnet ist, so dass eine Rippe von einem Teil längsseits einer Rippe eines anderen Teils liegen und in einer gemeinsamen Nut untergebracht sein kann.

## Revendications

1. Pièce d'usure interchangeable (10, 20) d'un outil de travail du sol qui est destiné à être monté sur le bâti d'un matériel agricole et qui comporte au moins une partie formant surface de travail (12), qui est exposée à une action d'usure par contact avec le sol lors de l'exécution d'une opération de travail du sol, et un élément de protection contre l'usure (14 ; 21, 21a ; 30) qui est monté sur la pièce d'usure au niveau de ladite partie formant surface de travail (12) et qui comporte une arête de travail (19, 24) qui fait au moins partie d'une arête de travail de la pièce d'usure, dans laquelle :
(a) l'élément de protection contre l'usure (14 ; 21, 21a ; 30) est monté en position par l'intermédiaire d'un assemblage du type à languette et rainure fixé par un adhésif (15, 18) entre l'élément de protection contre l'usure et la pièce d'usure, et dans laquelle l'arête de travail (19, 24) de l'élément de protection contre l'usure s'étend transversalement à l'axe longitudinal général de la rainure (18) ;
(b) un mouvement coulissant relatif dans le sens longitudinal de la rainure (18) peut avoir lieu entre l'élément de protection contre l'usure et la pièce d'usure afin de monter, ou de démonter, l'élément de protection contre l'usure ;
(c) l'assemblage initial entre la languette et la rainure définit un espace dans lequel un adhésif peut être introduit ; et
(d) l'assemblage entre la languette et la rainure comprend une formation divergente (15a ; 23, 23a ; 31) agencée de manière à résister à une séparation relative de l'élément de protection contre l'usure et de la pièce d'usure dans une direction perpendiculaire à la rainure de telle manière qu'une résistance à un déplacement longitudinal relatif entre la languette et la rainure soit fournie sensiblement par l'adhésif et qu'une résistance à n'importe quelle force tendant à séparer la languette de la rainure dans une direction perpendiculaire à l'étendue longitudinale de la rainure soit fournie sensiblement par la formation divergente.

2. Pièce d'usure selon la revendication 1, dans laquelle la languette (15) est prévue sur l'élément de protection contre l'usure (14) et la rainure (18) est formée dans la pièce d'usure.

3. Pièce d'usure selon la revendication 2, dans laquelle la rainure est formée par une fente sans fond (18) formée dans la pièce d'usure (10).

4. Pièce d'usure selon l'une quelconque des revendications 1 à 3, dans laquelle l'élément de protection contre l'usure (14) comporte, sur un côté, une surface de travail trempée (17) et, sur son côté opposé, une nervure saillante (15) qui est reçue par une rainure de forme correspondante (18) dans la surface de la pièce d'usure (10).

5. Pièce d'usure selon la revendication 1, dans laquelle la surface (12) de la pièce (10) qui doit être protégée contre l'usure comporte une nervure saillante ou similaire et l'élément de protection contre l'usure (14) comporte une rainure correspondante sur sa face de montage pour un assemblage avec ladite nervure.

6. Pièce d'usure selon l'une quelconque des revendications précédentes et prenant la forme d'une pointe ou d'une dent (10).

7. Pièce d'usure selon l'une quelconque des revendications 1 à 5, dans laquelle un certain nombre d'éléments de protection contre l'usure distincts (21) sont montés adjacents les uns aux autres sur la pi'èce d'usure (20).

8. Pièce d'usure selon la revendication 7, dans laquelle les éléments de protection contre l'usure (21, 21a) sont agencée :
(a) côte à côte sur des rainures parallèles ;
(b) les uns derrière les autres dans le sens de la longueur d'une rainure commune ; ou
(c) côte à côte sur des rainures parallèles et les uns derrière les autres sur la longueur des rainures.

9. Pièce d'usure selon l'une quelconque des revendications précédentes, dans laquelle une nervure unique (23) est montée au centre du côté inférieur de l'élément de protection contre l'usure (21).

10. Pièce d'usure selon la revendication 8, dans laquelle des éléments de protection contre l'usure adjacents (21a) sont montés côte à côte, et chaque élément comporte deux nervures saillantes (23a) agencées une de chaque côté de celui-ci, de sorte qu'une nervure d'une pièce puisse se trouver le long d'une nervure d'une autre pièce et qu'elles soient logées dans une rainure commune.
